# EUROPÄISCHE PATENTSCHRIFT

(11) **EP 2 250 356 B1**
(45) Veröffentlichungstag und Bekanntmachung des Hinweises auf die Patenterteilung: **27.02.2013**
(21) Anmeldenummer: 09718910.4
(22) Anmeldetag: 05.03.2009
(51) Int. Cl.: F02C 1/05, F01K 3/18, F03D 9/02

(54) **SPEICHERUNG ELEKTRISCHER ENERGIE MIT WÄRMESPEICHER UND RÜCKVERSTROMUNG MITTELS EINES THERMODYNAMISCHEN KREISPROZESSES**
STORAGE OF ELECTRICAL ENERGY WITH THERMAL STORAGE AND RETURN THROUGH A THERMODYNAMIC CYCLE
STOCKAGE D'ÉNERGIE ÉLECTRIQUE AVEC UN ACCUMULATEUR DE CHALEUR ET PRODUCTION D'ÉNERGIE EN RETOUR GRÂCE À UN PROCÉDÉ DE CIRCUIT THERMODYNAMIQUE

(30) Priorität: 12.03.2008 EP 08004589
(43) Veröffentlichungstag der Anmeldung: 17.11.2010
(73) Patentinhaber: Siemens Aktiengesellschaft, 80333 München (DE)
(72) Erfinder: KÖNIG, Norbert, 91083 Baiersdorf (DE); JOCKENHOEVEL, Tobias, 90419 Nürnberg (DE); NIES, Rainer, 91080 Uttenreuth (DE); VORTMEYER, Nicolas, 91054 Erlangen (DE); WOLF, Erik, 91341 Röttenbach (DE)
(86) Internationale Anmeldenummer: PCT/EP2009/052604
(87) Internationale Veröffentlichungsnummer: WO 2009/112421

(56) Entgegenhaltungen:
- EP-A- 1 577 548
- WO-A-2006/007733
- WO-A-2007/134466
- DE-A1- 2 757 306
- US-A- 4 262 484
- US-A- 5 384 489
- US-A- 5 685 155
- US-A1- 2007 132 249

## Beschreibung

Die Erfindung betrifft eine Vorrichtung bzw. ein Verfahren zur Nutzung von Überkapazitäten im Stromnetz.

Im elektrischen Netz müssen die erzeugte Leistung und der Verbrauch immer im Gleichgewicht stehen. Durch den starken Ausbau erneuerbarer Energien stehen zeitweise starke Überkapazitäten zur Verfügung. Dem Überangebot an kontrollierbaren erneuerbaren Energien kann auf verschiedene Weise begegnet werden: Das fluktuierende Angebot kann durch Leistungssteigerung beziehungsweise -minderung konventioneller Kraftwerke ausgeglichen werden, anfallende erneuerbare Energie könnte erst gar nicht ins Netz eingespeist werden, d.h. dass beispielsweise Windturbinen abgeschaltet werden, oder die Energie könnte in ein Energiespeichersystem eingespeichert werden, also in Pumpspeicherkraftwerke, Druckluftspeicherkraftwerke oder Batterien mit unter Umständen hoher Anlagenkomplexität und hohen Kosten.

Die EP 1 577 548 A1 und die EP 1 577 549 A1 beschreiben eine Vorrichtung und eine Methode zur Speicherung von Energie und zur Stromerzeugung. Mit aus erneuerbaren Energien wie Windbeziehungsweise Sonnenenergie erzeugter elektrischer Energie wird ein Wärmespeicher erwärmt. Bei Bedarf wird die Wärme im Wärmespeicher genutzt, um Dampf zu erzeugen, der direkt einem thermodynamischen Prozess in einer Dampfturbine zugeführt wird, wobei die Dampferzeugung gegebenenfalls konventionell ergänzt wird.

Die US 5,384,489 beschreibt eine Vorrichtung bei der durch Windenergie elektrische Energie erzeugt wird, mit der ein Heizelement betrieben wird, um ein Fluid in einem Speichertank aufzuheizen, sowie eine Vorrichtung, um die gespeicherte Energie aus dem Tank wieder zu entnehmen. Die aus dem Speichertank entnommene Energie wird zur Raumheizung/Raumkühlung, zum Kühlen allgemein, zur Entsalzung, vorzugsweise jedoch für die Dampferzeugung zur Erzeugung von elektrischem Strom verwendet.

Aufgabe der Erfindung ist es, eine verbesserte Vorrichtung und ein verbessertes Verfahren zur Nutzung von Überkapazitäten im Stromnetz vorzuschlagen.

Diese Aufgabe wird erfindungsgemäß gelöst durch die Merkmale des Patentansprüche 1 und 12.

Weitere vorteilhafte Ausführungsformen sind in den Unteransprüchen genannt.

Ein Nachteil der Vorrichtungen und der Verfahren des Standes der Technik ist die zum Betrieb einer Dampfturbine nicht immer ausreichende Qualität und auch Quantität des im Wärmespeicher erzeugten Dampfes, wodurch eine konventionelle Nachfeuerung notwendig wird. Außerdem beschränken sich Vorrichtungen und Verfahren des Standes der Technik bei der Stromerzeugung auf ein Medium, nämlich Dampf.

Die erfinderische Vorrichtung hingegen will die Überkapazitäten im Stromnetz für eine Reihe verschiedener Wärmeverbraucher nutzen und sieht daher einen Wärmespeicher und ein Heizelement zur Speicherung von Energie aus dem Stromnetz im Wärmespeicher sowie einen Wärmetauscher mit einer Primärseite und einer Sekundärseite vor, wobei die Primärseite zur Ausspeicherung von Wärme aus dem wärmespeicher thermisch an den Wärmespeicher angekoppelt ist und wobei die Sekundärseite in eine Kraftwerksanlage geschaltet ist, wobei die Kraftwerksanlage, in die der Wärmetauscher geschaltet ist, eine Gasturbine umfasst und die Sekundärseite des Wärmetauschers (11) in die Gasturbine (13) geschaltet ist.

Der Wärmespeicher wird also nicht zur Erzeugung von Dampf verwendet, der direkt einer Dampfturbine zugeführt wird.

In einer vorteilhaften Ausgestaltung der Erfindung ist der Wärmetauscher zur Luftvorwärmung sekundärseitig in eine Luftzufuhrleitung eines Brenners geschaltet.

Es ist ebenfalls vorteilhaft, wenn der Wärmetauscher sekundärseitig in eine Brennstoffzufuhrleitung geschaltet ist, um den Brennstoff vorzuwärmen.

Es ist außerdem zweckmäßig, wenn der Wärmetauscher sekundärseitig in den Strom der Verbrennungsgase zu deren Zwischenüberhitzung geschaltet ist.

In einer weiteren vorteilhaften Ausgestaltung der Erfindung kann der Wärmetauscher aber auch in eine Kraftwerksanlage geschaltet sein, die neben einer Gasturbine auch eine Dampfturbine enthält.

In einer besonders vorteilhaften Kombination ist die Kraftwerksanlage eine GuD-Anlage, die einen Abhitzedampferzeuger zur Erzeugung von Dampf für die Dampfturbine mittels Wärme aus den Abgasen der Gasturbine umfasst.

Im erfinderischen Verfahren wird zur Nutzung von überkapazitäten im Stromnetz im Falle eines überangebots an Energie diese direkt über ein Heizelement in einen Wärmespeicher eingebracht und im Entladungsfall dieses Wärmespeichers die Wärme aus dem Wärmespeicher entnommenen und über einem Wärmetansderprozess indirekt in einen thermodynamischen kreisprozess eingekoppelt wird, wobei elektrische Energie erzeugt wird und wobei die Wärme aus dem Wärmespeicher einer Gasturbine zugeführt wird, beispielsweise zur Vorwärmung von Luft in einer Luftzufuhrleitung einer Brennkammer einerGasturbinenanlage, verwendet wird, oder mit Wärme aus dem Wärmespeicher Gasturbinen- Brennstoff vorgewärmt wird.

Beide Vorwärmungen reduzieren den Brennstoffverbrauch. Bei nahezu gleichbleibender abgegebener Leistung der Gasturbine führt die Vorwärmung somit zu einer Erhöhung des Gesamtwirkungsgrades der Gasturbinenanlage.

Eine hohe Energieausbeute kann auch dadurch erreicht werden, dass der Abgasstrom in einer Turbine einer Gasturbine zwischenüberhitzt wird.

Nachfolgend wird die Erfindung beispielhaft anhand der Zeichnungen näher erläutert. Es zeigen:
- FIG 1: schematisch das Konzept für die Speicherung von elektrischer Energie mit Wärmespeicher und Rückverstromung mittels eines thermodynamischen Kreisprozesses,
- FIG 2: schematisch die erfinderische Vorrichtung mit Heizelement, Wärmespeicher und Wärmetauscher und
- FIG 3: eine Gasturbinenanlage mit Luftvorwärmung, Brennstoffvorwärmung und Zwischenüberhitzung.

Im Wesentlichen gleich bleibende Elemente werden grundsätzlich mit den gleichen Bezugszeichen beziffert.

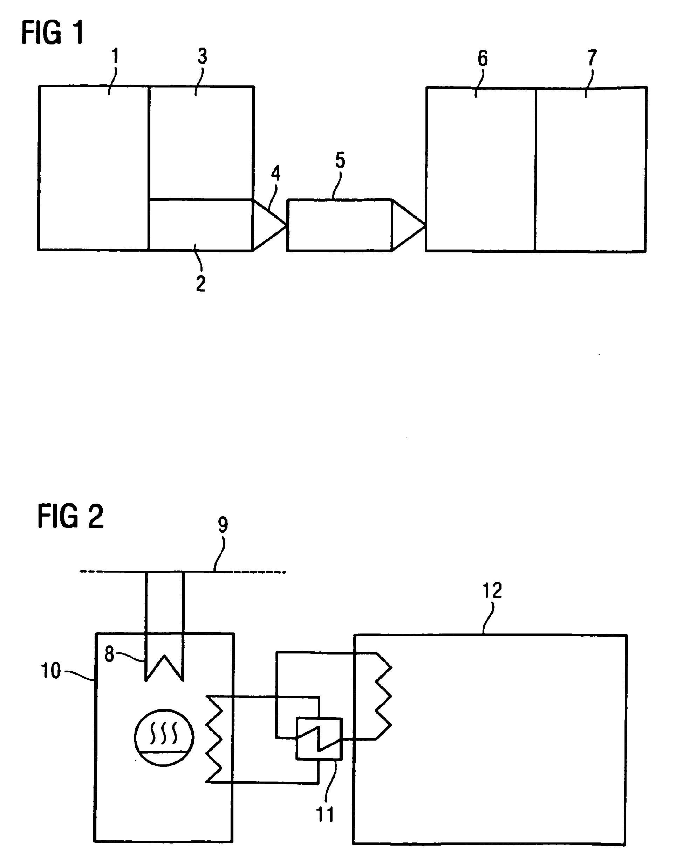

FIG 1 beschreibt das erfinderische Verfahren zur Nutzung von Überkapazitäten im Stromnetz. Übersteigt zu einem Zeitpunkt t1 die erzeugte Leistung 1 im Netz den Verbrauch 3, wird das Überangebot 2 an elektrischer Energie direkt über ein Heizelement in einen Wärmespeicher, zum Beispiel einen Salzspeicher oder Betonwärmespeicher, eingespeichert 4.

Im Entladungsfall dieses Energiespeichersystems, beispielsweise bei erhöhtem Leistungsbedarf im Stromnetz, wird die Wärme aus dem Wärmespeicher wieder entnommen und über einen Wärmetauscher, dessen Primärseite thermisch an den Wärmespeicher angekoppelt ist und dessen Sekundärseite in eine Gasturbine einer Kraftwerksanlage geschaltet ist, einer Kraftwerksanlage zugeführt 5, so dass die zum Zeitpunkt t2 erzeugte Leistung 6 den Bedarf 7 zum Zeitpunkt t2 deckt.

FIG 2 zeigt die wesentlichen Komponenten der erfinderischen Vorrichtung zur Nutzung von Überkapazitäten im Stromnetz. Über ein Heizelement 8 kann aus dem Stromnetz 9 elektrische Energie direkt in den Wärmespeicher 10 eingespeichert werden. Die Primärseite des Wärmetauschers 11 ist thermisch an den Wärmespeicher 10 gekoppelt. Die Sekundärseite des Wärmetauschers 11 ist in eine Gasturbine 13 (nicht gezeigt) einer Kraftwerksanlage 12 geschaltet.

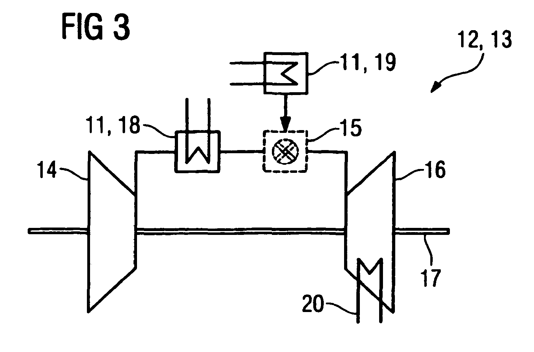

Die Kraftwerksanlage 12 gemäß FIG 3 zeigt eine Gasturbine 13 und umfasst einen Verdichter 14 zum Verdichten der Luft, welche dann einer Brennkammer 15 zugeführt wird und mit Brennstoff verbrannt wird. Die heißen Verbrennungsgase treiben die Turbine 16 an, die über eine Welle 17 mit dem Verdichter 14 gekoppelt ist. Wärme aus dem Wärmespeicher 10 kann über Wärmetauscher 11 sowohl zur Vorwärmung 18 der Druckluft, als auch zur Brennstoffvorwärmung 19 verwendet werden.

Optional wird die Brennkammer 15 vollständig abgeschaltet und die Turbine 16 lediglich durch die über einen Wärmetauscher 11 erwärmte komprimierte Luft angetrieben. Zweckmäßigerweise erfolgt eine Zwischenüberhitzung 20 im Bereich der Turbine 16.

## Patentansprüche

1. Vorrichtung zur Nutzung von Überkapazitäten im Stromnetz (9), umfassend einen Wärmespeicher (10), ein Heizelement (8) zur Speicherung von Energie aus dem Stromnetz (9) im Wärmespeicher (10) und einen Wärmetauscher (11) mit einer Primärseite und einer Sekundärseite, wobei die Primärseite zur Ausspeicherung von Wärme aus dem Wärmespeicher (10) thermisch an den Wärmespeicher (10) angekoppelt ist und wobei die Sekundärseite in eine Kraftwerksanlage (12) geschaltet ist, **dadurch gekennzeichnet, dass** die Kraftwerksanlage (12) eine Gasturbine (13) umfasst und die Sekundärseite des Wärmetauschers (11) in die Gasturbine (13) geschaltet ist.

2. Die Vorrichtung nach Anspruch 1, wobei der Wärmetauscher (11) zur Luftvorwärmung sekundärseitig in eine Luftzufuhrleitung einer Brennkammer (15) der Gasturbine (13) geschaltet ist.

3. Die Vorrichtung nach Anspruch 1 oder 2, wobei der Wärmetauscher (11) zur Brennstoffvorwärmung sekundärseitig in eine Brennstoffzufuhrleitung zur Brennkammer (15) der Gasturbine (13) geschaltet ist.

4. Die Vorrichtung nach einem der Ansprüche 1 bis 3, wobei der Wärmetauscher (11) zur Zwischenüberhitzung sekundärseitig in den Abgasstrom in einer Turbine (16) der Gasturbine (13) geschaltet ist.

5. Die Vorrichtung nach einem der vorhergehenden Ansprüche, wobei die Kraftwerksanlage (12) auch eine Dampfturbine (26) umfasst.

6. Die Vorrichtung nach einem der vorhergehenden Ansprüche, wobei die Kraftwerksanlage eine GuD-Anlage ist und einen Abhitzedampferzeuger umfasst.

7. Verfahren zur Nutzung von Überkapazitäten im Stromnetz, bei dem im Falle eines Überangebots an Energie diese direkt über ein Heizelement in einen Wärmespeicher eingebracht wird und im Entladungsfall dieses Wärmespeichers die Wärme aus dem Wärmespeicher entnommen und über einen Wärmetauscherprozess indirekt in einen thermodynamischen Kreisprozess eingekoppelt wird, wobei elektrische Energie erzeugt wird, **dadurch gekennzeichnet, dass** die Wärme aus dem Wärmespeicher einer Gasturbine zugeführt wird.

8. Verfahren nach Anspruch 7, wobei die Wärme aus dem Wärmespeicher zur Vorwärmung von Luft in einer Luftzufuhrleitung einer Brennkammer der Gasturbine verwendet wird oder mit Wärme aus dem Wärmespeicher Gasturbinen- Brennstoff vorgewärmt wird.

9. Verfahren nach Anspruch 7 oder 8, wobei auch ein Abgasstrom in einer Turbine einer Gasturbine mit Wärme aus dem Wärmespeicher zwischenüberhitzt wird.

## Claims

1. Apparatus for utilizing overcapacities in the power network (9), comprising a thermal storage unit (10), a heating element (8) for storing energy from the power network (9) in the thermal storage unit (10) and a heat exchanger (11) having a primary side and a secondary side, the primary side being coupled thermally to the thermal storage unit (10) for extracting heat from the thermal storage unit (10) and the secondary side being connected to a power plant system (12), **characterized in that** the power plant system (12) comprises a gas turbine (13) and the secondary side of the heat exchanger (11) is connected to the gas turbine (13).

2. Apparatus according to claim 1, wherein the heat exchanger (11) is connected on the secondary side to an air supply line of a combustion chamber (15) of the gas turbine (13) to preheat the air.

3. Apparatus according to claim 1 or 2, wherein the heat exchanger (11) is connected on the secondary side to a fuel supply line of a combustion chamber (15) of the gas turbine (13) to preheat the fuel.

4. Apparatus according to one of claims 1 to 3, wherein the heat exchanger (11) is connected on the secondary side to the waste gas flow in a turbine (16) of the gas turbine (13) for intermediate superheating.

5. Apparatus according to one of the preceding claims, wherein the power plant system (12) also comprises a steam turbine (26).

6. Apparatus according to one of the preceding claims, wherein the power plant system is a gas and steam system and comprises a waste heat steam generator (39).

7. Method for utilizing overcapacities in the power network, wherein in the event of an oversupply of energy, such energy is transferred directly by way of a heating element to a thermal storage unit and when said thermal storage unit is discharged, the heat is extracted from the thermal storage unit and injected indirectly by way of a heat exchanger process into a thermodynamic cycle, wherein electrical energy is generated, **characterized in that** the heat from the thermal storage unit is fed to a gas turbine.

8. Method according to claim 7, wherein the heat from the thermal storage unit is used to preheat air in an air supply line of a combustion chamber of the gas turbine or gas turbine fuel is preheated using heat from the thermal storage unit.

9. Method according to claim 7 or 8, wherein a waste gas flow in a turbine of a gas turbine also undergoes intermediate superheating using heat from the thermal storage unit.

## Revendications

1. Dispositif pour utiliser des surcapacités du secteur ( 9 ), comprenant un accumulateur ( 10 ) de chaleur, un élément ( 8 ) de chauffage, pour accumuler de l'énergie du secteur ( 9 ) dans l'accumulateur ( 10 ) de chaleur, et un échangeur de chaleur ( 11 ) ayant un côté primaire et un côté secondaire, le côté primaire étant, pour désaccumuler de la chaleur de l'accumulateur ( 10 ) de chaleur, couplé thermiquement à l'accumulateur ( 10 ) de chaleur, et le côté secondaire étant monté dans une centrale ( 12 ) électrique, **caractérisé en ce que** la centrale ( 12 ) électrique comprend une turbine ( 13 ) à gaz et le côté secondaire de l'échangeur ( 11 ) de chaleur est monté dans la turbine ( 13 ) à gaz.

2. Dispositif suivant la revendication 1, dans lequel l'échangeur de chaleur ( 11 ) est, pour le préchauffage de l'air, monté du côté secondaire dans un conduit d'apport d'air à une chambre de combustion ( 15 ) de la turbine ( 13 ) à gaz.

3. Dispositif suivant la revendication 1 ou 2, dans lequel l'échangeur de chaleur ( 11 ) est, pour préchauffer du combustible, monté du côté secondaire dans un conduit d'apport de combustible à la chambre de combustion ( 15 ) de la turbine ( 13 ) à gaz.

4. Dispositif suivant l'une des revendications 1 à 3, dans lequel l'échangeur de chaleur ( 11 ) est, pour la surchauffe intermédiaire, monté du côté secondaire dans le courant des gaz d'échappement d'une turbine ( 16 ) de la turbine ( 13 ) à gaz.

5. Dispositif suivant l'une des revendications précédentes, dans laquelle la centrale ( 12 ) électrique comprend aussi une turbine ( 26 ) à vapeur.

6. Dispositif suivant l'une des revendications précédentes, dans laquelle la centrale électrique comprend une installation GuD et un générateur de vapeur à récupération de la chaleur perdue.

7. Procédé d'utilisation de surcapacité du secteur, dans lequel, dans le cas d'une offre excédentaire d'énergie, on introduit celle-ci directement dans un accumulateur de chaleur par un élément de chauffage et, dans le cas d'une décharge de cet accumulateur de chaleur, on prélève la chaleur de cet accumulateur de chaleur et on l'injecte indirectement par un processus d'échange de chaleur dans un cycle thermodynamique, de l'énergie électrique étant produite, **caractérisé en ce que** l'on envoie la chaleur de l'accumulateur de chaleur à une turbine à gaz.

8. Procédé suivant la revendication 7, dans lequel on utilise la chaleur de l'accumulateur de chaleur pour préchauffer de l'air dans un conduit d'apport d'air d'une chambre de combustion de la turbine à gaz ou on préchauffe du combustible de la turbine à gaz par de la chaleur de l'accumulateur de chaleur.

9. Procédé suivant la revendication 7 ou 8, dans lequel on surchauffe intermédiairement, par de la chaleur de l'accumulateur de chaleur, un courant de gaz d'échappement dans une turbine d'une turbine à gaz.
